# DEMANDE DE BREVET EUROPEEN

(11) **EP 3 760 478 A1**
(43) Date de publication de la demande: **06.01.2021**
(21) Numéro de dépôt: 20183893.5
(22) Date de dépôt: 03.07.2020
(51) Int. Cl.: B60N 2/803, B60N 2/60, B60N 2/80

(54) **APPUI-TÊTE DE SIÈGE DE VÉHICULE AUTOMOBILE**

(30) Priorité: 05.07.2019 FR 1907499
(71) Demandeur: TESCA France, 75008 Paris (FR)
(72) Inventeur: MAQUIN, Corinne, 75008 Paris (FR); JESIERSKI, Nicolas, 75008 Paris (FR); MOUGEL, Thierry, 75008 Paris (FR)
(74) Mandataire: Sayettat, Julien Christian

(57) **Abrégé**

L'invention concerne un appui-tête (1) de siège de véhicule automobile comprenant : une armature métallique ; un coussin (4) de rembourrage en forme de manchon s'étendant en partie supérieure de ladite armature, ledit coussin présentant en vue de face une forme générale de U ; une coiffe (6) de revêtement présentant une ouverture (7) pourvue d'un moyen de fermeture (8), ladite coiffe étant chaussée en tension sur ledit coussin et étant pourvue de deux orifices (9) de passage de chacune desdites tiges respective, ladite ouverture s'étendant le long de la forme en U dudit coussin et en arrière de sa face avant (10), de sorte que lesdits moyens de fermeture ne puissent entrer en contact avec la tête dudit occupant.

## Description

L'invention concerne un appui-tête de siège de véhicule automobile.

Il est connu de réaliser un appui-tête de siège de véhicule automobile, ledit appui-tête comprenant :
- une armature métallique présentant en vue de face deux tiges sensiblement verticales et parallèles de liaison au dossier dudit siège, les extrémités supérieures desdites tiges étant reliées entre elles par une entretoise,
- un coussin de rembourrage en forme de manchon s'étendant en partie supérieure de ladite armature, ledit coussin présentant en vue de face une forme générale de U, renversé ou non, dont les branches forment appuis latéraux de la tête d'un occupant dudit siège,
- une coiffe de revêtement présentant une ouverture pourvue d'un moyen de fermeture, ladite coiffe étant chaussée en tension sur ledit coussin de manière à le masquer, ladite coiffe étant pourvue de deux orifices de passage de chacune desdites tiges respective.

Selon une réalisation, la coiffe présente une forme de manchon en U de géométrie analogue à celle du coussin, ledit coussin étant logé en contact serrant dans ledit manchon, ledit coussin ayant été introduit à travers une ouverture disposée en extrémité dudit manchon.

Une telle façon de procéder est complexe puisqu'il faut faire coulisser le manchon le long du coussin lors de son montage, et de ce fait exercer un effort pouvant entraîner des problèmes articulaires, ou analogues, pour l'opérateur de fabrication.

Selon une autre réalisation, la coiffe en vue de face est sous forme d'une poche sensiblement rectangulaire dans laquelle est logé le coussin, la zone de ladite coiffe disposée entre les branches définissant un espace intérieur dépourvu de mousse.

Dans une telle réalisation, l'ouverture se situe usuellement selon le bord inférieur de la coiffe, le moyen de fermeture - par exemple sous forme de deux profilés s'emboitant l'un dans l'autre - formant une zone susceptible d'entrer aisément en contact avec la tête d'un occupant du siège, et donc susceptible de lui occasionner des blessures en cas d'accident du véhicule.

L'invention a pour but de proposer un agencement permettant de pallier ces inconvénients.

A cet effet, et selon un premier aspect, l'invention propose un appui-tête de siège de véhicule automobile, ledit appui-tête comprenant :
- une armature métallique présentant en vue de face deux tiges sensiblement verticales et parallèles de liaison au dossier dudit siège, les extrémités supérieures desdites tiges étant reliées entre elles par une entretoise,
- un coussin de rembourrage en forme de manchon s'étendant en partie supérieure de ladite armature, ledit coussin présentant en vue de face une forme générale de U, renversé ou non, dont les branches forment appuis latéraux de la tête d'un occupant dudit siège,
- une coiffe de revêtement présentant une ouverture pourvue d'un moyen de fermeture, ladite coiffe étant chaussée en tension sur ledit coussin de manière à le masquer, ladite coiffe étant pourvue de deux orifices de passage de chacune desdites tiges respective,
ladite ouverture s'étendant le long de la forme en U dudit coussin et en arrière de sa face avant, de sorte que lesdits moyens de fermeture ne puissent entrer en contact avec la tête dudit occupant.

Dans cette description, les termes de positionnement dans l'espace (haut, supérieur, longitudinal, latéral, devant, arrière, vertical, horizontal,...) sont pris en référence à l'appui-tête disposé dans le véhicule en situation d'utilisation. Lorsqu'il est mentionné une vue de face, on fait référence à une vue selon une direction longitudinale.

Avec l'agencement proposé, on limite le risque de blessure qui pourrait être causé par l'appui-tête en situation d'accident et on simplifie, dans certains cas, la réalisation dudit appui-tête.

D'autres particularités et avantages de l'invention apparaîtront dans la description qui suit, faite en référence aux figures jointes, dans lesquelles :
[Fig.1a] et
   [Fig.1b] sont des vues schématiques en perspective éclatée (figure 1a) et non éclatée (figure 1b) d'un appui-tête selon une première réalisation,
[Fig.2a] et
   [Fig.2b] sont des vues schématiques en perspective éclatée (figure 2a) et non éclatée (figure 2b) d'un appui-tête selon une deuxième réalisation,
[Fig.3a] et
   [Fig.3b] sont des vues schématiques en perspective éclatée (figure 3a) et non éclatée (figure 3b) d'un appui-tête selon une variante de la première réalisation.

En référence aux figures, on décrit un appui-tête 1 de siège de véhicule automobile, ledit appui-tête comprenant :
- une armature métallique présentant en vue de face deux tiges 2 sensiblement verticales et parallèles de liaison au dossier dudit siège, les extrémités supérieures desdites tiges étant reliées entre elles par une entretoise 3,
- un coussin 4 de rembourrage en forme de manchon s'étendant en partie supérieure de ladite armature, ledit coussin présentant en vue de face une forme générale de U, renversé ou non, dont les branches 5 forment appuis latéraux de la tête d'un occupant dudit siège,
- une coiffe 6 de revêtement - par exemple à base de textile pourvu d'une couche d'envers en mousse - présentant une ouverture 7 pourvue d'un moyen de fermeture 8 - par exemple sous forme de bandes agrippantes de type Velcro ®, de « fermeture éclair », de boutons pression,... -, ladite coiffe étant chaussée en tension sur ledit coussin de manière à le masquer, ladite coiffe étant pourvue de deux orifices 9 de passage de chacune desdites tiges respective,
ladite ouverture s'étendant le long de la forme en U dudit coussin et en arrière de sa face avant 10, de sorte que lesdits moyens de fermeture ne puissent entrer en contact avec la tête dudit occupant.

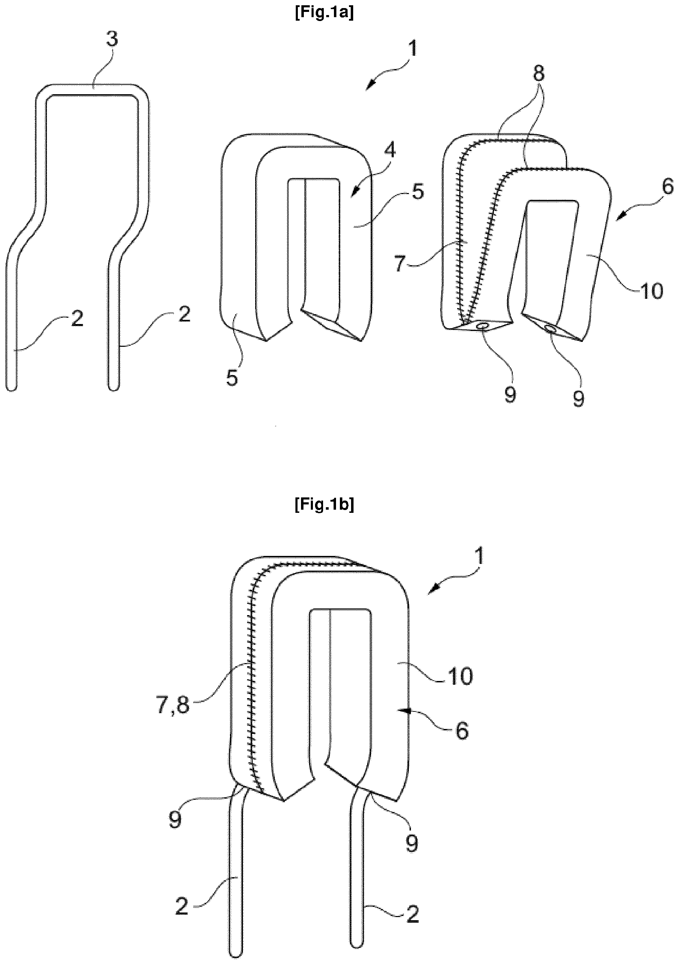

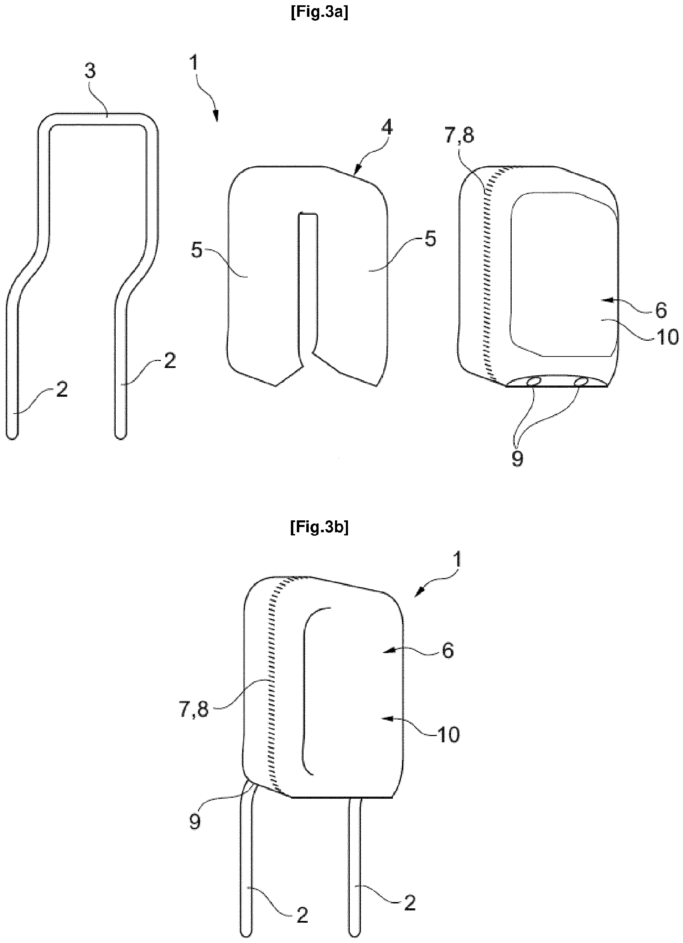

Selon la réalisation représentée en figures 1 et 3, l'entretoise 3 est sous forme d'une barre généralement horizontale de sorte que la partie centrale du coussin 4 forme appui du haut de la tête d'un occupant du siège.

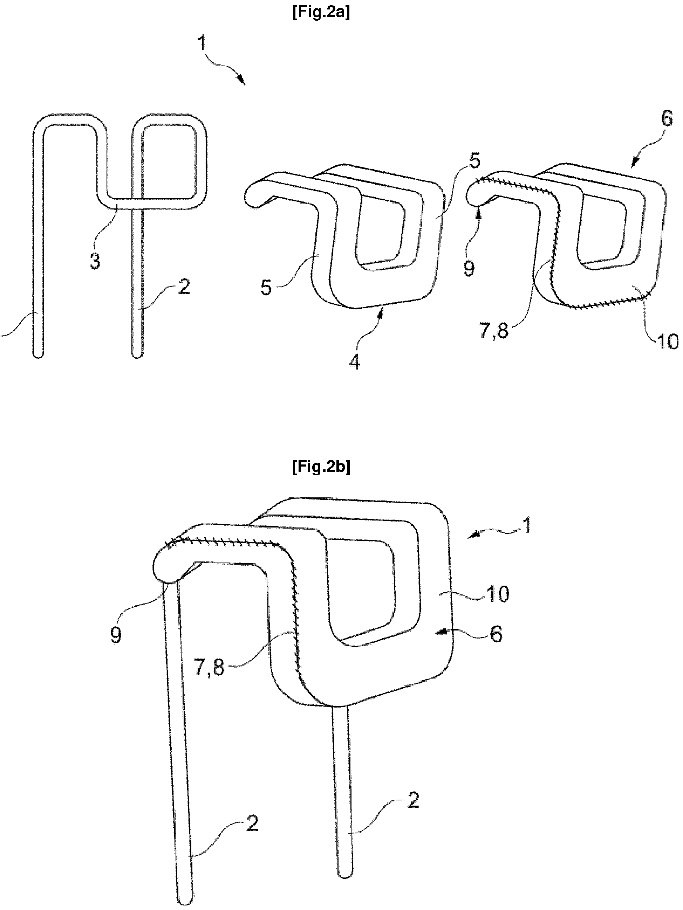

Selon la réalisation représentée en figures 2, l'entretoise 3 présente en vue de face une forme générale U correspondant sensiblement à la forme du coussin 4, ladite entretoise s'étendant devant la partie supérieure des tiges 2 de sorte que l'armature présente en vue latérale une forme générale de J renversé, la partie centrale dudit coussin formant appui de la nuque d'un occupant du siège.

Selon les réalisations représentées, l'ouverture 7 est localisée en périphérie extérieure du coussin 4.

De façon non représentée, le coussin 4 peut présenter une section radiale - ce terme étant pris en référence à la direction d'extension de l'armature dans la zone considérée - évolutive, de manière à permettre d'augmenter l'épaisseur de rembourrage en zones d'appui de la tête d'un occupant du siège.

Selon les réalisations représentées en figures 1 et 2, la coiffe 6 présente une forme de manchon en U de géométrie analogue à celle du coussin 4, ledit coussin étant logé en contact serrant dans ladite coiffe.

Selon une variante non représentée, l'appui-tête 1 est pourvu d'un format de revêtement opaque ou semi-transparent ou transparent - étant par exemple sous forme de maille peu serrée ou encore de matériau plastique - monté en tension sur la coiffe 6 à l'intérieur du U de manière à former rideau d'occultation ou de semi-occultation ou non occultant.

Un format semi-transparent ou transparent permet une vision vers l'arrière au travers quand le siège est inoccupé.

Selon la variante de réalisation représentée en figures 3, la coiffe 6 en vue de face est sous forme d'une poche sensiblement rectangulaire dans laquelle est logé le coussin 4, la zone de ladite coiffe disposée entre les branches 5 définissant un espace intérieur dépourvu de mousse.

De façon non représentée, on pourrait utiliser une coiffe 6 analogue en variante de la réalisation des figures 2.

Selon une réalisation, la coiffe 6 est à base de tricot conformé en chaussette, de manière à ne pas présenter de coutures d'assemblage de différents éléments de coiffe entre eux.

Selon diverses réalisations, le coussin 4 est au choix :
- à base de mousse élastiquement compressible surmoulant l'armature,
- à base de mousse élastiquement compressible fendue selon la longueur dudit coussin et est emboité sur ladite armature,
- à base de matériau fibreux fendu selon la longueur dudit coussin et est emboité sur ladite armature, ledit matériau étant formé de fibres liées entre elles par un agent de liaison, ledit agent étant par exemple formé de fibres fusibles.

Selon diverses réalisations réalisation, l'armature est à base d'un tube métallique monobloc replié ou encore en plusieurs parties assemblées entre elles, par exemple en trois parties, à savoir les deux tiges 2 et l'entretoise 3.

## Revendications

1. Appui-tête (1) de siège de véhicule automobile, ledit appui-tête comprenant :
• une armature métallique présentant en vue de face deux tiges (2) sensiblement verticales et parallèles de liaison au dossier dudit siège, les extrémités supérieures desdites tiges étant reliées entre elles par une entretoise (3),
• un coussin (4) de rembourrage en forme de manchon s'étendant en partie supérieure de ladite armature, ledit coussin présentant en vue de face une forme générale de U, renversé ou non, dont les branches (5) forment appuis latéraux de la tête d'un occupant dudit siège,
• une coiffe (6) de revêtement présentant une ouverture (7) pourvue d'un moyen de fermeture (8), ladite coiffe étant chaussée en tension sur ledit coussin de manière à le masquer, ladite coiffe étant pourvue de deux orifices (9) de passage de chacune desdites tiges respective,
ledit appui-tête étant **caractérisé en ce que** ladite ouverture s'étend le long de la forme en U dudit coussin et en arrière de sa face avant (10), de sorte que lesdits moyens de fermeture ne puissent entrer en contact avec la tête dudit occupant.

2. Appui-tête selon la revendication 1, **caractérisé en ce que** l'entretoise (3) est sous forme d'une barre généralement horizontale de sorte que la partie centrale du coussin (4) forme appui du haut de la tête d'un occupant du siège.

3. Appui-tête selon la revendication 1, **caractérisé en ce que** l'entretoise (3) présente en vue de face une forme générale U correspondant sensiblement à la forme du coussin (4), ladite entretoise s'étendant devant la partie supérieure des tiges (2) de sorte que l'armature présente en vue latérale une forme générale de J renversé, la partie centrale dudit coussin formant appui de la nuque d'un occupant du siège.

4. Appui-tête selon l'une quelconque des revendications 1 à 3, **caractérisé en ce que** l'ouverture (7) est localisée en périphérie extérieure du coussin (4).

5. Appui-tête selon l'une quelconque des revendications 1 à 4, **caractérisé en ce que** le coussin (4) présente une section radiale évolutive, de manière à permettre d'augmenter l'épaisseur de rembourrage en zones d'appui de la tête d'un occupant du siège.

6. Appui-tête selon l'une quelconque des revendications 1 à 5, **caractérisé en ce que** la coiffe (6) présente une forme de manchon en U de géométrie analogue à celle du coussin (4), ledit coussin étant logé en contact serrant dans ladite coiffe.

7. Appui-tête selon la revendication 6, **caractérisé en ce qu'**il est pourvu d'un format de revêtement opaque ou semi-transparent ou transparent monté en tension sur la coiffe (6) à l'intérieur du U de manière à former rideau d'occultation ou de semi-occultation ou non occultant.

8. Appui-tête selon l'une quelconque des revendications 1 à 5, **caractérisé en ce que** la coiffe (6) en vue de face est sous forme d'une poche sensiblement rectangulaire dans laquelle est logé le coussin (4), la zone de ladite coiffe disposée entre les branches (5) définissant un espace intérieur dépourvu de mousse.

9. Appui-tête selon l'une quelconque des revendications 1 à 8, **caractérisé en ce que** la coiffe est à base de tricot conformé en chaussette, de manière à ne pas présenter de coutures d'assemblage de différents éléments de coiffe entre eux.

10. Appui-tête selon l'une quelconque des revendications 1 à 9, **caractérisé en ce que** le coussin (4) est au choix :
• à base de mousse élastiquement compressible surmoulant l'armature,
• à base de mousse élastiquement compressible fendue selon la longueur dudit coussin et est emboité sur ladite armature,
• à base de matériau fibreux fendu selon la longueur dudit coussin et est emboité sur ladite armature, ledit matériau étant formé de fibres liées entre elles par un agent de liaison.
